# EUROPEAN PATENT SPECIFICATION

(11) **EP 2 820 986 B1**
(45) Date of publication and mention of the grant of the patent: **04.05.2016**
(21) Application number: 14150106.4
(22) Date of filing: 03.01.2014
(51) Int. Cl.: A47J 43/06, A47J 43/08, A47J 43/044

(54) **Hand blender with a built-in 2-speed gearbox**
Handmixer mit eingebautem Getriebe mit zwei Geschwindigkeiten
Mélangeur à main avec double boîte de vitesses intégrée

(30) Priority: 03.07.2013 CN 201310276508
(43) Date of publication of application: 07.01.2015
(73) Proprietor: Huiyang Allan Plastic & Electric Industries Co., Limited, 516035 Huizhou City Guangdong (CN)
(72) Inventor: Cheung, Shu Sang, 516035 Huizhou City, Guangdong (CN); Pang, To Yin, 516035 Huizhou City, Guangdong (CN); Luo, Hailiang, 516035 Huizhou City, Guangdong (CN)
(74) Representative: Karakatsanis, Georgios

(56) References cited:
- EP-A1- 1 967 105
- EP-A1- 2 457 479
- WO-A1-2004/112558

## Description

### Technical Field

The present invention relates to a hand-held blender, and in particular to a hand blender with a built-in 2-speed gearbox which can outputs two different speeds coaxially.

### Background Art

Hand-held food blenders become more and more popular because of the compact size and convenient to use. Almost hand blenders have one stirring speed, cannot meet the demand on stirring of different food because rotate speed is not high enough or too low. In the process of stirring, it is more suitable to stir in low speed for some material after high speed blending in order to achieve better taste and nutritive value, conventional design cannot meet the demand.

In addition, the patent application made in China, whose publication number is CN1697622 discloses a hand blender. The output shaft and input shaft of hand blender are not set in the same straight line, only through driving gear broadside engage with driven gear, to realize reducing speed function, the defect of this structure is transmitting instability, and if want to achieve large transmission ratio while enlarge diameter of gear, it is necessary to increase the volume of housing, especially increase radial of the housing, therefore also wasting space of interior housing.

### Disclosure of the Invention

The present invention provides an improved hand blender with a built-in 2-speed gearbox.

A hand blender with a built-in 2-speed gearbox includes
a housing;
a stirring tool;
a motor secured in the housing;
an input shaft connected to the motor and configured to rotate synchronously with the motor;
an output shaft meshing with the stirring tool and configured for outputting power to the stirring tool;
a gearbox meshing with the input shaft and the output shaft and configured for driving the output shaft to rotate in a first direction with a first speed when the motor rotate in the first direction and for driving the output shaft to rotate in the first direction with a second speed when the motor rotates in a reverse direction.

An improvement of the above scheme, the input shaft and output shaft are coaxially arranged, the gearbox comprises a constant transmission assembly, the constant transmission assembly is a one-way bearing I , the inner ring and the outer ring of the one-way bearing I are respectively engaged with the input shaft and the output shaft and are rotated coaxially therewith; The rollers of the one-way bearing I slip or free-wheel when the inner ring rotates in a second direction opposite to the first direction.

A further improvement of the above scheme, the upper end of the output shaft defines a counter bore, the outer ring of the one-way bearing I is fixed in the counter bore.

A further improvement of the above scheme, the gearbox comprises a differential transmission assembly engaged with the input shaft and the output shaft; the differential transmission assembly is configured to transmit power to the output shaft when the motor rotates in a second direction that is opposite to the first direction, permitting the output shaft to rotate in the first direction with the second speed that is slower than the first speed.

A further improvement of the above scheme, the differential transmission assembly comprises:
a sun gear which is sleeved on the input shaft and rotates along with the input shaft;
an annular gear fixed in the housing;
a planet gear set received in the annular gear and directly engaged with both the sun gear and the annular gear;
a planetary carrier for holding the planet gear set;
an upper transmission turntable which is steady connected with the planetary carrier and rotates synchronously with the planetary carrier;
an upper bevel ring arranged at a lower end surface of the upper transmission turntable which faces the stirring tool ;
a plurality of bevel gears engaged with the upper bevel ring directly and uniformly distributed circumferentially;
a bevel gear carrier fixed to the housing and configured for holding the plurality of bevel gears therein, wherein the inner surface of the bevel gear carrier defines a plurality of holes for receiving the fear axes of the plurality of bevel gears;
a lower transmitting turntable arranged under the bevel gear and sleeved on the output shaft, wherein the upper end surface of the lower transmitting turntable arranges a lower bevel ring which directly engaged with the plurality of bevel gears; and
a one-way bearing II (71. 75) configured at one of the following positions or both of the positions: 1) between the input shaft and the sun gear, and 2) between the lower transmitting turntable and the output shaft;
wherein the rollers of the one-way bearing II slip or free-wheel when the inner ring of the one-way bearing II is rotated in the first direction.

A further improvement of the above scheme, the planet gear set comprises 3∼5 planet gears, the planet gears are all circumferential distributed uniformly in the lower end surface of the planetary carrier by their vertical spindles.

A further improvement of the above scheme, a plurality of fixed pins fixes the planetary carrier and the upper transmission turntable to realize rotating synchronously between the planetary carrier and the upper transmitting turntable.

A further improvement of the above scheme, the fixed pins are vertical spindles stretching downward and penetrating fixedly into the interpenetrating holes preinstalled in the planetary carrier.

A further improvement of the above scheme, the number of the bevel gears is 3∼5, the bevel gears are arranged in the bevel gear carrier by its fear axes, the fear axes are mutually perpendicular to the output shaft.

A further improvement of the above scheme, the lower end of the output shaft is provided with a connector which is butt jointed with the stirring tool.

An further improvement of the above scheme, an upper end cover and a lower end cover are configured under the motor and above the connector, respectively.

The present invention has the following beneficial effects: 1. the present invention through coordinating of constant transmission assembly and differential transmission assembly, hand blender can realize coaxially outputting two different speed in same direction, that is the same stirring connector can achieve two different rotational speed. Not only can it satisfy different food need different stirring speed, but also satisfy the same food need different stirring speed in different mixed phase during stirring process, therefore it has obvious progress; 2. Because of the hand blender in present invention output two speed are identical in rotational direction, therefore the connector has better adaptability and better flexibility when it match different stirring tool or cutting tool, it do not require changing standard design of accessories because of two speed output in different direction, such as direction of turning for blades of stirring tool, the direction of turning for blades of cross cutting tool, and the direction of turning for blades of squeeze screw etc. 3. The vertical integration and composite structure of constant transmission assembly and differential transmission assembly in present invention, and arranged in the housing as well the motor, to realize linear transmission coaxially, therefore it greatly save space, reduce volume of the machine, and compact structure, ensure transmitting stability. 4. When stirring hot food or hot liquid, switching to stir in low speed, which can avoid danger about hot food or hot liquid fly out. Brief Description of Drawings
FIG. 1 is a perspective view of a hand blender of the present invention.
FIG. 2 is an exploded view of the hand blender according to a first embodiment.
FIG. 3 is a cross-section view of a hand blender according to a first embodiment of the present invention.
FIG. 4 is a cross-section view of a hand blender according to a second embodiment of the present invention.
FIG. 5 is a cross-section view of a hand blender according to a third embodiment of the present invention.

### Best Mode for Carrying out the Invention

Embodiments of the present disclosure will now be described in detail below, with reference to the accompanying drawings.

### Embodiment I:

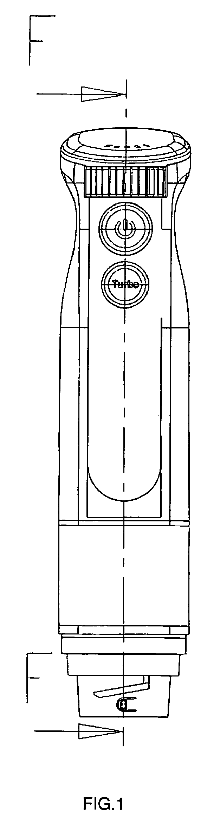

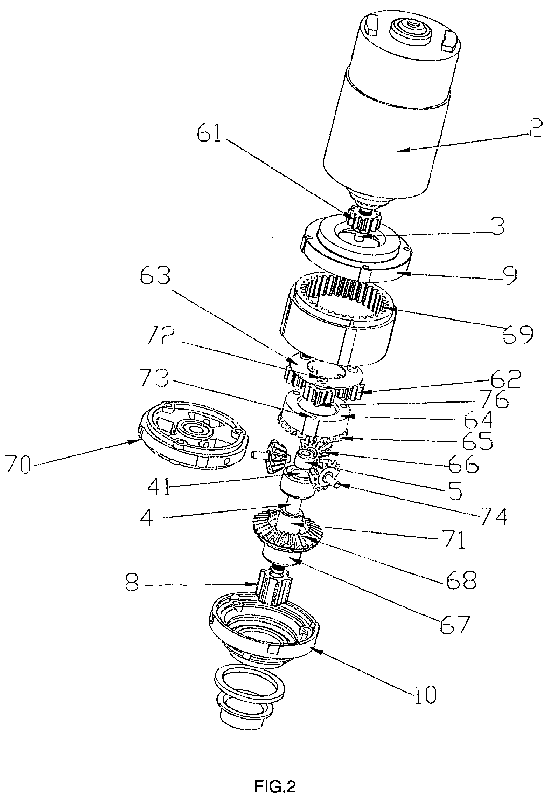

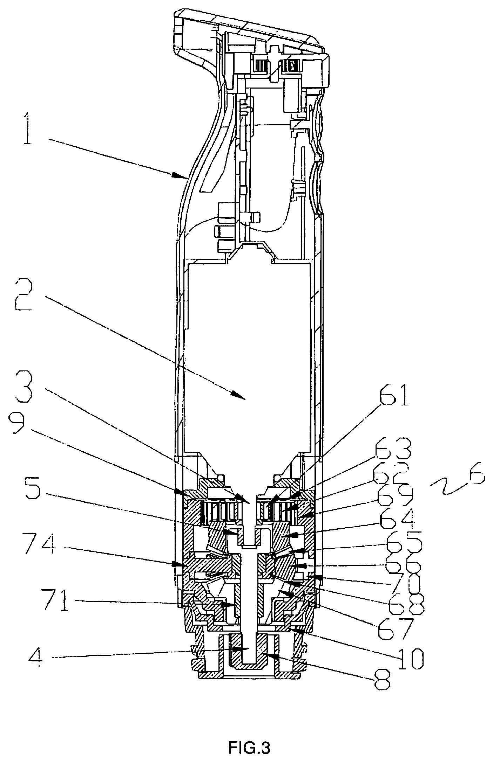

As shown in FIGS. 1-3, a hand blender with a built-in 2-speed gearbox according to a first embodiment of the present invention includes a housing 1, a motor 2 arranged in the housing 1, an input shaft 3 with synchronous rotation with the rotor of motor 2, an output shaft 4 for outputting power to a stirring tool, an upper end cover 9 configured under the motor in the housing, a lower end cover 10 arranged above the connector and in the housing, a constant transmission assembly 5, a differential transmission assembly 6, and a connector 8. The constant transmission assembly 5 and the differential transmission assembly 6 are arranged between the input shaft 3 and the output shaft 4, and are configured to drive the output shaft 4 to rotate clockwise whenever the motor rotates clockwise or anticlockwise. The connector 8 is set at the lower end of the output shaft 4 and engages with the stirring tool. The output shaft and the input shaft are coaxially arranged. The constant transmission assembly 5 is a one-way bearing I which is locked when rotates clockwise. The inner ring and the outer ring of one-way bearing I respectively engages with the input shaft and the output shaft and rotate coaxially. The one-way bearing I is locked when rotates clockwise means that the one-way bearing I transmits rotation to the output shaft 4 when the input shaft rotates clockwise, and the rollers of the one way bearing I slip or free-wheel when the inner ring rotates anticlockwise thus cannot transmit rotation to the output shaft. The upper end of the output shaft defines a counter bore 41, the outer ring of the one-way bearing I is fixed in the counter bore. The differential transmission assembly 6 includes a sun gear 61 sleeved on the input shaft and capable of rotating clockwise along with the input shaft, a planet gear set 62 engaging with the sun gear, and a planetary carrier 63 for receiving the planet gear set. The planet gear set 62 constitute of 3∼5 planet gears, the planet gears are all circumferential distributed uniformly in the lower end surface of the planetary carrier via vertical spindles 72. The vertical spindles 6 are downward stretch and penetrate fixedly into interpenetrating holes 73 defined in the planetary carrier 63 to form fixed pins.

The planetary carrier 63 is fixed and rotated synchronously with an upper transmission turntable 64. An upper bevel ring 65 is configured at the lower end surface of the upper transmitting turntable 64. The upper bevel ring 65 direct engages with a plurality of bevel gears 66 which are circumferential distributed uniformly. A Lower transmitting turntable 67 is arranged under the bevel gear, the upper end surface of the lower transmitting turntable 67 arrange a lower bevel ring 68 which direct engages with the bevel gears, the lower transmitting turntable 67 is sleeved on the output shaft. The planet gear set 62 direct engages with an annular gear 69 fixed in the housing. The bevel gears are arranged in the bevel gear carrier 70, the bevel gear carrier is fixed in the housing, The number of the bevel gears may be three to five, and the bevel gears are arranged in the bevel gear carrier via a plurality of fear axes 74. The vertical spindle 74 and the output shaft 4 are mutually vertical. Between the lower transmitting turntable and the output shaft arrange a one-way bearing II 71 which is locked when driven anticlockwise.

The motor 2 drives the input shaft 3 to rotate, when the input shaft 3 rotates clockwise, the power is transmitted to the output shaft 4 by the one-way bearing I which is locked, the output shaft 4 drives an agitator arm connected with the connector 8 to rotate clockwise, the connector 8 can detachably connect different machining tools such as a stirring tool, a cutting tool, etc. Besides, the input shaft 3 drives the differential transmission assembly 6 to rotate, in details the sun gear 61 rotates clockwise, thus drives the planet gear set 62 to rotate clockwise, the annular gear 69 rotate along with the planet gear set 62, the upper transmitting turntable 64 integrated with the planet gear set 62 and the upper bevel ring 65 also rotate clockwise. The bevel gears 66 transmit power to the lower bevel ring 68, making the lower transmission turntable 67 rotates anticlockwise, thus the rollers of the one-way bearing II 71 slip or free-wheel, and power cannot be transmitted to the output shaft 4, therefore, the input speed and the output speed ratio is 1:1.

When the input shaft 3 rotates anticlockwise, the rollers of the one-way bearing I slip or free-wheel, power cannot be directly transmitted to the output shaft 4. At the moment, the input shaft 3 drives the sun gear 61 to rotate anticlockwise, the sun gear 61 thus drives the planet gear set 62 to rotate, the annular gear 69 rotates with the planet gear set 62, the upper transmitting turntable 64 integrated with the planet gear set 62 and the upper bevel ring 65 also rotate anticlockwise. The bevel gear 66 transmits power to the lower bevel ring 68, to make the lower transmitting turntable 67 rotating clockwise, power is transmitted to the output shaft 4 by the one-way bearing II 71 which is locked, and an output speed is smaller than an input speed. Thereby realizing the blender coaxially outputs two different speeds in the same direction by the clockwise and anticlockwise rotation of the input shaft.

### Embodiment II:

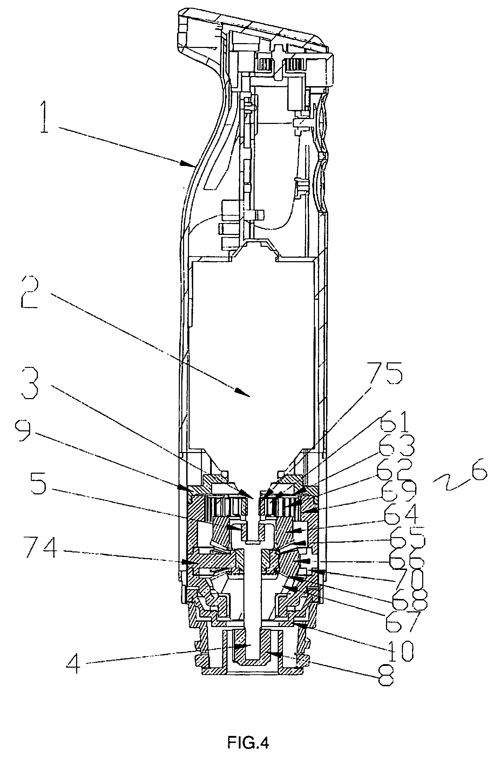

As shown in FIG. 4, the structure of the hand blender with a built-in 2-speed gearbox revealed in this embodiment is similar to the structure of that in the embodiment II, the difference lies on that, the one-way bearing II 75 is arranged between the input shaft 3 and the sun gear 61, and is locked when being driven anticlockwise. While the one-way bearing II 71 is omitted and is not arranged between the lower transmitting turntable 67 and the output shaft 4, the lower transmitting turntable rigidly connects with the output shaft. When the input shaft 3 rotates clockwise, the one-way bearing II 75 rotates freely, the driving force of the input shaft 3 cannot transmit to the differential transmission assembly 6, power is transmitted to the output shaft 4 via the one-way bearing I, to make the output shaft 4 rotating clockwise in transmission ratio 1:1. The output shaft 4 drives the differential transmission assembly 6 rotating through the lower transmitting turntable 67, power is transmitted to the sun gear 61 from the bevel gear 66, the upper transmitting turntable 64 and the planet gear set 62, sun gear 61 rotates anticlockwise and drives the outer ring of the one-way bearing II 75 rotating anticlockwise, thus the rollers of the one-way bearing II 75 slip or free-wheel, the sun gear cannot transmit power to the input shaft 3, avoid causing dynamic interference. At the same time, the output shaft 4 drives the agitator arm connected with the connector 8 to rotate, the connector 8 can detachably connect different machining tools such as a stirring tool, a cutting tool, etc.

When the input shaft 3 rotates anticlockwise, the rollers of the one-way bearing I slip or free-wheel, power is not directly transmitted to the output shaft 4. At the moment, the input shaft 3 drives the differential transmission assembly 6 rotating through the one-way bearing II 71, in details the sun gear 61 rotates anticlockwise, the sun gear 61 drives the planet gear set 62 rotating, the annular gear 69 rotates with the planet gear set 62, the upper transmitting turntable 64 integrated with the planet gear set 62 and the upper bevel ring 65 also rotate anticlockwise. Power is transmitting to the lower bevel ring 68 through the bevel gear 66, to make the lower transmitting turntable 67 rotate clockwise, thereby the lower transmission turntable 67 drives the output shaft 4 to rotate clockwise, the output speed is smaller than the input speed of the input shaft. Thereby realizing the blender coaxially outputs two different speeds in the same direction by the clockwise and anticlockwise rotations of the input shaft.

### Embodiment III:

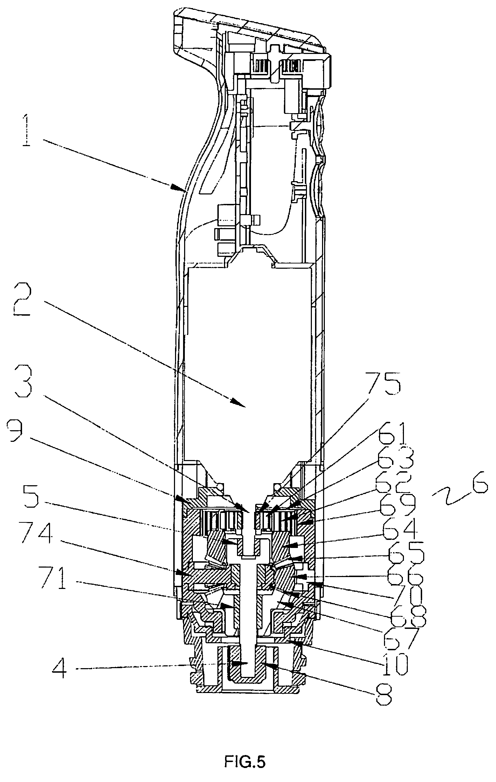

As shown in FIG. 5, the structure of the hand blender with a built-in 2-speed gearbox revealed in this example is similar to the structure of that in the embodiment I, the difference lies on that, between the input shaft and the sun gear, and between the lower transmitting turntable and the output shaft respectively arrange a one-way bearing II (71,75), the one-way bearing II 75 is locked when driven anticlockwise, when the input shaft 3 rotates clockwise, power is transmitted to the output shaft 4 through the one-way bearing I , the output shaft 4 drives the rabble connected with the connector 8 to rotate, the connector 8 can connect different machining tools detachably such as a stirring tool, a cutting tool, etc. At the moment, the differential transmission assembly 6 rotates freely because the one-way bearing II 75 which is locked when rotating anticlockwise, the driving force of the input shaft 3 is not transmitted to the differential transmission assembly 6, result that the differential transmission assembly 6 do not rotate, thereby saving power, delaying the working life of the drive parts, the input speed and the output speed ration is 1:1.

When the input shaft 3 rotates anticlockwise, because the one-way bearing I rotates freely, power is not directly transmitted to the output shaft, at the moment, the input shaft 3 drives the differential transmission assembly 6 to rotate via the one-way bearing II 75 which is locked. In details the sun gear 61 rotates anticlockwise, the sun gear 61 drives the planet gear set 62 to rotate, the planet gear set 62 and the annular gear 69 also rotate, the upper transmitting turntable 64 integrated with the planet gear set 62 and the upper bevel ring 65 also rotate anticlockwise, power is transmitted to the lower bevel ring 68 through the bevel gears 66, to make the lower transmitting turntable 67 rotating clockwise, power is transmitted to the output shaft 4 through the one-way bearing II 71 which is locked, the output speed is reduced compared to the input speed of the input shaft. Thereby realize blender coaxially outputting two different speeds in the same direction by input shaft rotates clockwise or rotate anticlockwise.

The above examples is better implementation model in the represent invention, it should be explained that, without departing from the scope of the present invention and its substantial technical, such as the number of planet gear set or the number of bevel gear, the direction of rotation of gear and output shaft, and the location of one-way bearing or self-locking direction etc, those skilled in the art are able to make various corresponding changes and modifications according to the present invention, but these respective changes and modifications shall fall within the scope of protection of the present invention.

## Claims

1. A hand blender with a built-in 2-speed gearbox, comprising:
a housing (1);
a stirring tool;
a motor (2) secured in the housing (1);
an input shaft (3) connected to the motor (2) and configured to rotate synchronously with the motor (2);
an output shaft (4) meshing with the stirring tool and configured for outputting power to the stirring tool;
the hand blender is **characterized in that**:
the hand blender comprises a gearbox meshing with the input shaft (3) and the output shaft (4) and configured for driving the output shaft (4) to rotate in a first direction with a first speed when the motor (2) rotates in the first direction and for driving the output shaft (4) to rotate in the first direction with a second speed when the motor (2) rotates in a reverse direction.

2. The hand blender of claim 1, wherein the input shaft (3) and the output shaft (4) are coaxially arranged, the gearbox comprises a constant transmission assembly (5), the constant transmission assembly (5) is a one-way bearing, an inner ring and an outer ring of the one-way bearing are respectively engaged with the input shaft (3) and the output shaft (4) and are rotated coaxially therewith; rollers of the one-way bearing slip or free-wheel when the inner ring rotates in a second direction opposite to the first direction.

3. The hand blender of claim 2, wherein an upper end of the output shaft (3) defines a counter bore (41), the outer ring of the one-way bearing is fixed in the counter bore (41).

4. The hand blender of claim 2, wherein the gearbox comprises a differential transmission assembly (6) engaged with the input shaft (3) and the output shaft (4); the differential transmission assembly (6) is configured to transmit power to the output shaft (4) when the motor (2) rotates in a second direction that is opposite to the first direction, permitting the output shaft (4) to rotate in the first direction with the second speed that is slower than the first speed.

5. The hand blender of claim 4, wherein the differential transmission assembly (6) comprises:
a sun gear (61) which is sleeved on the input shaft (3) and rotates along with the input shaft (3);
an annular gear (69) fixed in the housing;
a planet gear set (62) received in the annular gear (69) and directly engaged with both the sun gear (61) and the annular gear (69);
a planetary carrier (63) for holding the planet gear set (62);
an upper transmission turntable (64) which is steadily connected with the planetary carrier (63) and rotates synchronously with the planetary carrier (63);
an upper bevel ring (65) arranged at a lower end surface of the upper transmission turntable (64) which faces the stirring tool ;
a plurality of bevel gears (66) engaged with the upper bevel ring (65) directly and uniformly distributed circumferentially;
a bevel gear carrier (70) fixed to the housing and configured for holding the plurality of bevel gears (66) therein, wherein an inner surface of the bevel gear carrier (70) defines a plurality of holes for receiving gear axes (74) of the plurality of bevel gears (66);
a lower transmitting turntable (67) arranged under the bevel gears (66) and sleeved on the output shaft (4), wherein an upper end surface of the lower transmitting turntable (67) arranges a lower bevel ring (68) which is directly engaged with the plurality of bevel gears (66); and
a one-way bearing (71 or 75) configured at one of the following positions or both of the positions: 1) between the input shaft (3) and the sun gear (61), and 2) between the lower transmitting turntable (67) and the output shaft (4);
wherein rollers of the one-way bearing (71 or 75) slip or free-wheel when an inner ring of the one-way bearing (71 or 75) is rotated in the first direction.

6. The hand blender of claim 5, wherein the planet gear set (62) comprises 3∼5 planet gears, the planet gears are all circumferential distributed uniformly in a lower end surface of the planetary carrier (63) by their vertical spindles (72).

7. The hand blender of claim 6, wherein a plurality of fixed pins fixes the planetary carrier (63) and the upper transmission turntable (64) to realize synchronous rotation between the planetary carrier (63) and the upper transmitting turntable (64).

8. The hand blender of claim 7, wherein the fixed pins are vertical spindles stretching downward and penetrating fixedly into interpenetrating holes (73) preinstalled in the planetary carrier (63).

9. The hand blender of claim 5, wherein the number of the bevel gears (66) is 3∼5, the bevel gears (66) are arranged in the bevel gear carrier (70) by their gear axes (74), the gear axes (74) are mutually perpendicular to the output shaft (4).

10. The hand blender of claim 1, wherein a lower end of the output shaft (4) is provided with a connector (8) which is butt jointed with the stirring tool.

11. The hand blender of claim 10, wherein an upper end cover (9) and a lower end cover (10) are configured under the motor (2) and above the connector (8) respectively.

## Patentansprüche

1. Stabmixer mit einem integrierten 2-Gang-Getriebe, umfassend:
ein Gehäuse (1);
ein Rührwerkzeug;
einen Motor (2), welcher in dem Gehäuse (1) befestigt ist;
eine Antriebswelle (3), welche mit dem Motor (2) verbunden ist und zum synchronen Drehen mit dem Motor (2) konfiguriert ist;
eine Abtriebswelle (4), welche mit dem Rührwerkzeug kämmt und zum Abgeben von Leistung an das Rührwerkzeug konfiguriert ist;
wobei der Stabmixer **dadurch gekennzeichnet ist, dass**:
der Stabmixer ein Getriebe umfasst, welches mit der Antriebswelle (3) und die Abtriebswelle (4) kämmt und zum Antrieb der Abtriebswelle (4) zur Drehung mit einer ersten Drehzahl in eine erste Richtung konfiguriert ist, wenn der Motor (2) sich in die erste Richtung dreht, und zum Antrieb der Abtriebswelle (4) zur Drehung in die erste Richtung mit einer zweiten Drehzahl konfiguriert ist, wenn der Motor (2) sich in eine entgegengesetzte Richtung dreht.

2. Stabmixer nach Anspruch 1, wobei die Antriebswelle (3) und die Abtriebswelle (4) koaxial angeordnet sind, wobei das Getriebe eine konstante Getriebeanordnung (5) umfasst, wobei die konstante Getriebeanordnung (5) ein Einweglager ist, wobei ein Innenring und ein Außenring des Einweglagers jeweils in Eingriff mit der Antriebswelle (3) beziehungsweise der Abtriebswelle (4) stehen und koaxial mit dieser gedreht werden; wobei die Kugeln des Einweglagers rutschen oder freilaufen, wenn sich der Innenring in eine zweite Richtung entgegengesetzt der ersten Richtung dreht.

3. Stabmixer nach Anspruch 2, wobei ein oberes Ende der Abtriebswelle (4) eine Gegenbohrung (41) definiert, wobei der Außenring des Einweglagers in der Gegenbohrung (41) fixiert ist.

4. Stabmixer nach Anspruch 2, wobei das Getriebe eine Differentialgetriebeanordnung (6) in Eingriff mit der Antriebswelle (3) und der Abtriebswelle (4) aufweist; wobei die Differentialgetriebeanordnung (6) so konfiguriert ist, um Leistung an die Abtriebswelle (4) zu übertragen, wenn sich der Motor (2) in eine zweite Richtung dreht, das heißt, entgegengesetzt zur ersten Richtung, wodurch es der Abtriebswelle (4) ermöglicht wird, sich in die erste Richtung mit der zweiten Drehzahl zu drehen, die langsamer als die erste Drehzahl ist.

5. Stabmixer nach Anspruch 4, wobei die Differentialgetriebeanordnung (6) umfasst:
ein Sonnenrad (61), welches auf die Antriebswelle (3) aufgeschoben ist und sich zusammen mit der Antriebswelle (3) dreht;
ein Ringzahnrad (69), welches in dem Gehäuse befestigt ist;
ein Planetenzahnradsatz (62), welcher in dem ringförmigen Zahnrad (69) aufgenommen ist und direkt sowohl mit dem Sonnenrad (61) als auch dem Ringzahnrad (69) in Eingriff steht;
einen Planetenträger (63) zum Halten für den Planetengetriebesatz (62);
einen oberen Übertragungsdrehteller (64), welcher ständig mit dem Planetenträger (63) verbunden ist und sich synchron mit dem Planetenträger (63) dreht;
einen oberen Kegelring (65), welcher an einer unteren Endoberfläche des oberen Übertragungsdrehtellers (64) angeordnet ist, die dem Rührwerkzeug zugewandt ist;
eine Mehrzahl von Kegelrädern (66), welche direkt in Eingriff mit dem oberen Kegelring (65) stehen und gleichmäßig über den Umfang verteilt sind;
einen Kegelradträger (70), welcher am Gehäuse befestigt und zum Halten der Mehrzahl von Kegelrädern (66) darin ausgebildet ist, wobei eine Innenfläche des Kegelradträgers (70) eine Vielzahl von Löchern zur Aufnahme von Zahnradachsen (74) der Mehrzahl von Kegelrädern (66) aufweist;
einen unteren Übertragungsdrehteller (67), welcher unter den Kegelrädern (66) angeordnet und auf der Abtriebswelle (4) aufgeschoben ist, wobei eine obere Endoberfläche des unteren Übertragungsdrehtellers (67) einen unteren Kegelring (68) anordnet, der direkt mit der Mehrzahl von Kegelrädern in Eingriff (66) in Eingriff steht; und
ein Einweglager (71 oder 75), welches an einer der folgenden Positionen oder an beiden der Positionen konfiguriert ist: 1) zwischen der Antriebswelle (3) und dem Sonnenrad (61), und 2) zwischen dem unteren Übertragungsdrehteller (67) und der Abtriebswelle (4);
wobei die Kugeln des Einweglagers (71 oder 75) schlupfen oder freilaufen, wenn ein Innenring des Einweglagers (71 oder 75) in die erste Richtung gedreht wird.

6. Stabmixer nach Anspruch 5, wobei der Planetengetriebesatz (62) 3∼5 Planetenrädern umfasst, wobei die Planetenräder alle am Umfang gleichmäßig in einer unteren Endfläche des Planetenträgers (63) durch ihre vertikalen Spindeln (72) verteilt sind.

7. Stabmixer nach Anspruch 6, wobei eine Mehrzahl von feststehenden Stiften den Planetenträger (63) und den oberen Übertragungsdrehteller (64) fixiert, um eine synchrone Drehung zwischen dem Planetenträger (63) und dem oberen Übertragungsdrehteller (64) zu verwirklichen.

8. Stabmixer nach Anspruch 7, wobei die feststehenden Stifte vertikale Spindeln sind, welche sich nach unten dehnen und fest in Löcher (73), die im Planetenträger (63) vorweg vorgesehen sind, hinein eindringen.

9. Stabmixer nach Anspruch 5, wobei die Anzahl der Kegelräder (66) 3∼5 ist, die Kegelräder (66) im Kegelradträger (70) durch ihre Zahnradachsen (74) angeordnet sind, die Zahnradachsen (74) zueinander gemeinsam senkrecht zur Abtriebswelle (4) angeordnet sind.

10. Stabmixer nach Anspruch 1, wobei ein unteres Ende der Abtriebswelle (4) mit einem Verbindungsstück (8) versehen ist, welches stumpf mit dem Rührwerkzeug verbunden ist.

11. Stabmixer nach Anspruch 10, wobei eine obere Endabdeckung (9) und eine untere Endabdeckung (10) unter dem Motor (2) beziehungsweise über dem Verbindungsstück (8) ausgebildet sind.

## Revendications

1. Mixeur manuel avec une boîte à 2 vitesses intégrée, comprenant :
un logement (1) ;
un agitateur ;
un moteur (2) fixé dans le logement (1) ;
un arbre d'entrée (3) raccordé au moteur (2) et
configuré pour tourner de manière synchrone avec le moteur (2) ;
un arbre de sortie (4) qui s'engrène avec l'agitateur et est configuré pour délivrer une alimentation électrique à l'agitateur ;
le mixeur manuel est **caractérisé en ce que** :
le mixeur manuel comprend une boîte de vitesses qui s'engrène avec l'arbre d'entrée (3) et l'arbre de sortie (4) et configurée pour entraîner l'arbre de sortie (4) pour tourner dans une première direction avec une première vitesse quand le moteur (2) tourne dans la première direction et pour entraîner l'arbre de sortie (4) pour tourner dans la première direction avec une seconde vitesse quand le moteur (2) tourne dans une direction inverse.

2. Mixeur manuel selon la revendication 1, dans lequel l'arbre d'entrée (3) et l'arbre de sortie (4) sont disposés coaxialement, la boîte de vitesses comprend un ensemble de transmission constante (5), l'ensemble de transmission constante (5) est un palier unidirectionnel, une bague intérieure et une bague extérieure du palier unidirectionnel viennent respectivement en prise avec l'arbre d'entrée (3) et l'arbre de sortie (4) et sont tournées coaxialement avec celui-ci ; les roulements du palier unidirectionnel patinent ou partent en roue libre quand la bague intérieure tourne dans une seconde direction opposée à la première direction.

3. Mixeur manuel selon la revendication 2, dans lequel une extrémité supérieure de l'arbre de sortie (4) définit un contre alésage (41), la bague extérieure du palier unidirectionnel est fixée dans le contre alésage (41).

4. Mixeur manuel selon la revendication 2, dans lequel la boîte de vitesses comprend un ensemble de transmission différentielle (6) qui vient en prise avec l'arbre d'entrée (3) et l'arbre de sortie (4) ; l'ensemble de transmission différentielle (6) est configuré pour transmettre une puissance à l'arbre de sortie (4) quand le moteur (2) tourne dans une seconde direction qui est opposée à la première direction, en permettant à l'arbre de sortie (4) de tourner dans la première direction avec la seconde vitesse qui est plus lente que la première vitesse.

5. Mixeur manuel selon la revendication 4, dans lequel l'ensemble de transmission différentielle (6) comprend :
un engrenage solaire (61) qui est emmanché sur l'arbre d'entrée (3) et tourne conjointement à l'arbre d'entrée (3) ;
un engrenage annulaire (69) fixé dans le logement ;
un ensemble d'engrenages planétaires (62) reçus dans l'engrenage annulaire (69) et venant prise directement avec à la fois l'engrenage solaire (61) et l'engrenage annulaire (69) ;
un porte satellite (63) pour porter l'ensemble d'engrenages planétaires (62) ;
une table tournante de transmission supérieure (64) qui est constamment raccordée au porte satellite (63) et tourne de manière synchrone avec le porte satellite (63) ;
une bague biseautée supérieure (65) disposée à une surface d'extrémité inférieure de la table tournante de transmission supérieure (64) qui fait face à l'agitateur ;
une pluralité d'engrenages coniques (66) qui viennent en prise directement avec la bague biseautée supérieure (65) et distribués uniformément sur la circonférence ;
un support d'engrenage conique (70) fixé au logement et configuré pour soutenir la pluralité d'engrenages coniques (66), dans lequel une surface intérieure du support d'engrenages coniques (70) définit une pluralité de trous pour recevoir des axes d'engrenages (74) de la pluralité d'engrenages coniques (66) ;
une table tournante de transmission intérieure (67) disposée sous les engrenages coniques (66) et emmanchée sur l'arbre de sortie (4), dans lequel une surface d'extrémité supérieure de la table tournante de transmission inférieure (67) dispose une bague biseautée inférieure (68) qui vient directement en prise avec la pluralité d'engrenages coniques (66) ; et
un palier unidirectionnel (71 ou 75) configuré à une des positions suivantes ou les deux positions : entre l'arbre d'entrée (3) et l'engrenage solaire (61) et 2) entre la table tournante de transmission inférieure (67) et l'arbre de sortie (4) ;
dans lequel les roulements du palier unidirectionnel (71 ou 75) patinent ou partent en roue libre quand une bague intérieure du palier unidirectionnel (71 ou 75) est tournée dans la première direction.

6. Mixeur manuel selon la revendication 5, dans lequel l'ensemble d'engrenages planétaires (62) comprend 3∼5 engrenages planétaires, les engrenages planétaires sont tous distribués uniformément sur la circonférence dans une surface d'extrémité inférieure du porte satellite (63) par leurs broches verticales (72).

7. Mixeur manuel selon la revendication 6, dans lequel une pluralité de goupilles fixes fixe le porte satellite (63) et la table tournante de transmission supérieure (64) pour réaliser une rotation synchrone entre le porte satellite (63) et la table tournante de transmission supérieure (64).

8. Mixeur manuel selon la revendication 7, dans lequel les goupilles fixes sont des broches verticales s'étendant vers le bas et pénétrant fixement dans des trous d'interpénétration (73) pré installées dans le porte satellite (63).

9. Mixeur manuel selon la revendication 5, dans lequel le nombre d'engrenages coniques (66) est 3∼5, les engrenages coniques (66) sont disposés dans le support d'engrenages coniques (70) par leurs axes d'engrenages (74), les axes d'engrenages (74) sont mutuellement perpendiculaires à l'arbre de sortie (4).

10. Mixeur manuel selon la revendication 1, dans lequel une extrémité inférieure de l'arbre de sortie (4) est pourvue d'un connecteur (8) qui est joint en bout-à-bout avec l'agitateur.

11. Mixeur manuel selon la revendication 10, dans lequel un couvercle d'extrémité supérieure (9) et un couvercle d'extrémité inférieure (10) sont configurés sous le moteur (2) et au-dessus du connecteur (8) respectivement.
